# EUROPEAN PATENT APPLICATION

(11) **EP 4 730 699 A1**
(43) Date of publication of application: **22.04.2026**
(21) Application number: 24829728.5
(22) Date of filing: 11.01.2024
(51) Int. Cl.: H04L 9/32

(54) **CERTIFICATE PRESETTING METHOD, DEVICE AND COMPUTER-READABLE STORAGE MEDIUM**

(30) Priority: 28.06.2023 CN 202310781535
(71) Applicant: ZTE CORPORATION, Shenzhen, Guangdong 518057 (CN)
(72) Inventor: JIANG, Liang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/071849
(87) International publication number: WO 2025/001065

(57) **Abstract**

The embodiments of the present application disclose a certificate preset method, a device, and a computer-readable storage medium, belonging to the technical field of communication. The method includes: obtaining a network management version package and a preset certificate package matching the network management version package; installing a network management system based on the network management version package; creating a secure storage module corresponding to each network management module in the network management system; and storing the preset certificates in the preset certificate package in the secure storage module, so that each network management module associated with the secure storage module obtains the required preset certificate.

## Description

### CROSS-REFERENCE TO RELATED APPLICATIONS

This application claims priority to Chinese Patent Application No. 202310781535.6, filed June 28, 2023, the entire contents of which are incorporated herein by reference.

### TECHNICAL FIELD

The embodiments of the present application relate to the technical field of communication, and in particular to a certificate preset method, a certificate preset device and a computer-readable storage medium.

### BACKGROUND

In the related art, network management digital certificates are generally preset using self-signed certificates preset in modules. However, this method for presetting digital certificates has security and authority issues. The obtained certificates are not necessarily reliable, and the certificates are strongly coupled with the network management version. If vulnerabilities or security issues are found and the certificates need to be updated, each module will have to release network management upgrade packages or patch packages, making the update process very complicated.

### SUMMARY

The main purpose of the embodiments of the present application is to provide a certificate preset method, a certificate preset device and a computer-readable storage medium, aiming to solve the technical problem of how to improve the authority, security, and ease of updating of preset digital certificates.

To achieve the above objective, embodiments of the present application provide a certificate preset method, including:
obtaining a network management version package and a preset certificate package matching the network management version package;
installing a network management system based on the network management version package; and
creating a secure storage module corresponding to each network management module in the network management system, and storing preset certificates in the preset certificate package into the secure storage module, so that each network management module associated with the secure storage module obtains required preset certificates.

Besides, to achieve the above objective, embodiments of the present application further provide a certificate preset apparatus, including:
an acquisition module, configured to acquire a network management version package and a preset certificate package matching the network management version package;
an installation module, configured to install the network management system based on the network management version package; and
a matching module, configured to create a secure storage module corresponding to each network management module in the network management system, and store the preset certificates in the preset certificate package into the secure storage module, so that each network management module associated with the secure storage module can obtain the required preset certificates.

Besides, to achieve the above objective, embodiments of the present application further provide a certificate preset device, including: a memory, a processor, and a computer program stored on the memory and executable on the processor, and when the computer program is executed by the processor, the certificate preset method as described above is implemented.

Besides, to achieve the above objective, embodiments of the present application further provide a computer-readable storage medium, a computer program is stored on the computer-readable storage medium, and when the computer program is executed by a processor, the certificate preset method as described above is implemented.

### BRIEF DESCRIPTION OF THE DRAWINGS

To more clearly illustrate the technical solutions in the embodiments of the present application or in the related art, accompanying drawings used in the description of the embodiments or the related art will be briefly introduced below. Obviously, the drawings described below are only some embodiments of the present application. For those skilled in the art, other drawings can be obtained based on these drawings without creative effort.
FIG. 1 is a flow chart illustrating a certificate preset method according to an embodiment of the present application.
FIG. 2 is a flow chart illustrating a process for generating a preset certificate package involved in the certificate preset method according to an embodiment of the present application.
FIG. 3 is a detailed flowchart illustrating a process for installing a network management system involved in the certificate preset method according to an embodiment of the present application.
FIG. 4 is a flowchart illustrating a process for verifying a preset certificate package involved in the certificate preset method according to an embodiment of the present application.
FIG. 5 is a flow chart illustrating a password decryption and private key splitting process involved in the certificate preset method according to an embodiment of the present application.
FIG. 6 is a detailed flowchart illustrating the password decryption and private key splitting process involved in the certificate preset method according to an embodiment of the present application.
FIG. 7 is a schematic diagram illustrating a certificate update process involved in the certificate preset method according to an embodiment of the present application.
FIG. 8 is a detailed flowchart illustrating the certificate update process involved in the certificate preset method according to an embodiment of the present application.
FIG. 9 is a schematic diagram of a system architecture involved in the certificate preset method according to an embodiment of the present application.
FIG. 10 is a schematic structural diagram of a certificate preset device according to an embodiment of the present application.
FIG. 11 is a schematic structural diagram of the certificate preset device according to an embodiment of the present application.

### DETAILED DESCRIPTION OF THE EMBODIMENTS

In the following description, specific details such as particular system architectures and techniques are set forth for illustrative purposes and not for limitation, in order to provide a thorough understanding of the embodiments of the present application. However, those skilled in the art should understand that the embodiments of the present application may also be implemented in other embodiments without these specific details. In other instances, detailed descriptions of well-known systems, apparatuses, circuits, and methods are omitted to avoid unnecessary details from obscuring the description of the embodiments of the present application.

It should be noted that although a logical order is shown in the flowchart, in some cases, the steps shown or described may be performed in a different order than that shown in the flowchart. The terms "first", "second" etc., in the specification, claims, and the aforementioned drawings are used to distinguish similar objects and are not necessarily used to describe a specific order or sequence.

It should also be understood that references to "an embodiment" or "some embodiments" in the specification of embodiments of the present application mean that one or more embodiments of the present application include a specific feature, structure, or characteristic described in connection with that embodiment. Therefore, the phrases "in an embodiment", "in some embodiments", "in other embodiments", "in still other embodiments" etc., appearing in different parts of this specification do not necessarily refer to the same embodiment, but rather mean "one or more, but not all, embodiments", unless otherwise specifically emphasized. The terms "include", "comprise", "have" and variations thereof all mean "including but not limited to", unless otherwise specifically emphasized.

A digital certificate is a digital authentication that identifies the parties involved in internet communication. People can use it online to verify each other's identity. Therefore, the digital certificate is also called a digital identifier. The digital certificate ensures the integrity and security of information and data exchanged between internet users on computer networks through encryption or decryption.

To business (ToB, which provides services to businesses, such as equipment manufacturers) enterprise customers face a more severe and complex security environment than telecom operators. In addition to higher requirements for ease of operation and automation, they also have higher security requirements such as secure startup, default security, zero trust, and data not leaving the campus. Moreover, the ToB enterprise customers are more sensitive to costs, and security infrastructure such as certificate authority (CA) servers is generally lacking.

The network management system involves modules that use transport layer security (TLS) and hypertext transfer protocol secure (HTTPS) protocols for north-south communication. These modules require preset digital certificates authorized by the equipment vendor before they start running. Otherwise, they cannot immediately provide services to the outside world using secure protocols after startup. If they obtain certificates online using insecure protocols, there will be a security window before the certificates are obtained. Moreover, due to network security considerations, operators and enterprise customers will not allow the network management system to connect to the equipment vendor's website online to obtain certificates. Therefore, ordinary online certificate distribution or renewal methods cannot solve the problem of preset certificates required for secure startup of the network management system.

In the related art, network management digital certificates are generally preset using self-signed certificates preset in modules. This approach has several problems: 1) since the certificate is preset in the module development code, the security of the certificate private key cannot be guaranteed, and if the certificate private key is leaked or misused during the development phase, the digital certificate will not serve as an identity identifier; 2) based on the security issues in 1), self-signed certificates are not issued by the equipment manufacturer's authoritative CA, therefore, the communication peer cannot verify the authority of the certificate, and trusting the certificate faces significant doubts; while distrusting the certificate will prevent the establishment of a secure protocol link with the peer using the certificate; 3) the certificate and network management version are strongly coupled, if a vulnerability or security issue is found and the certificate needs to be updated, each module will have to release a network management upgrade package or patch package, which is very complicated in terms of process and operation.

Based on this, the embodiments of the present application provide a certificate preset method, apparatus, device, and a computer-readable storage medium. By implementing the certificate preset method proposed in the embodiments of the present application, the equipment vendor does not need to connect to the equipment vendor's website online when presetting the certificate, which can meet the strict network security requirements of operators and ToB enterprise users, provide a secure channel to the outside world as soon as the network management is started, and there is no security window before obtaining the certificate online by running an insecure protocol. The offline preset or update of the certificate is more reliable and stable than the online method, and it does not require operators or ToB enterprise users to build their own certificate servers. Certificate security protection starts from the non-production environment. The development and testing of the network management module do not rely on real certificates, and there is no need to distribute real certificates issued by authoritative CAs from equipment manufacturers in the R&D code. The release and update of certificates are decoupled from the network management version, and there is no need for one-to-one correspondence. Management is more convenient and updates are easier. If security issues occur, updated certificate packages can be released quickly to solve the problem without updating the network management code to upgrade or patch the network management version.

The certificate preset method, apparatus, device, and a computer-readable storage medium provided in the present application are specifically described through the following embodiments. First, the certificate preset method in the present application is described.

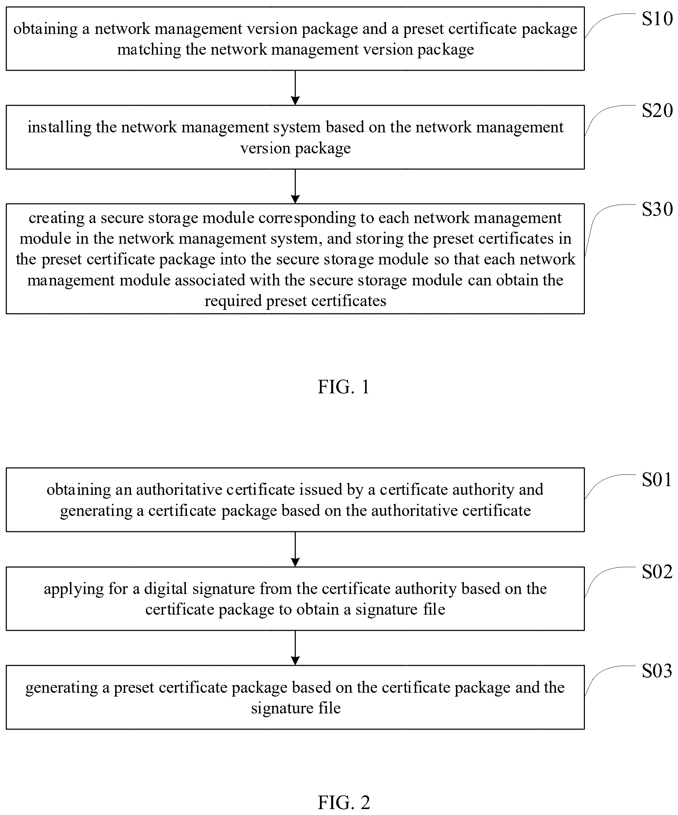

Referring to FIG. 1, FIG. 1 is a flow chart of the certificate preset method according to an embodiment of the present application. This certificate preset method can be applied to a certificate preset device. As shown in FIG. 1, the certificate preset method provided in this embodiment includes steps S10 to S30.

Step S10, obtaining a network management version package and a preset certificate package matching the network management version package.

The certificate preset method proposed in this embodiment is easier to understand when combined with actual application scenarios. Therefore, this embodiment uses the certificate preset scenario of the network management equipment vendor as an example for the following explanation. In this scenario, certificate preset in the production environment is generally carried out along with a fresh installation of the network management version. To perform the installation, it is necessary to first obtain the network management version package, installation tools, and matching preset certificate package from the non-production environment, and upload these packages and tools to the server to be installed, thus completing the preparation work before the network management version installation and the equipment vendor certificate preset.

As an example, this embodiment can be considered as omitting the steps of obtaining the network management version package, installation tool, and matching preset certificate package in a non-production environment before step S10, and is considered to directly obtain the network management version package and the preset certificate package matching the network management version package through the installation tool.

As an example, in this embodiment, the directory structure within the preset certificate package zip file is as follows:

```
  cert_description.json
  [consumer_name]
       keystore
            PFX
                        xxx_xxxx.pfx
                                xxx_xxxx_password.txt
       trust
             PEM
                xxx.cer(.crt)
```

Here, [consumer_name] is the name of the network management service module. Each module has its own directory, and multiple directories of different modules can be placed under one certificate package, corresponding to the definition in cert_description.json below. xxx_xxxx.pfx represents the combined private key and certificate file; xxx_xxxx_password.txt is the password of the xxx_xxxx.pfx file, which is stored using AES256 encryption; xxx_xxxx_trust.cer (.crt) represents the peer CA certificate trusted by this module.

As an example, the structure of the certificate consumer description file (cert_description.json) is as follows:

```
  [
  {
  "consumer_name" : "", // Name of network management module, naming convention:
 [app_name]_[usage], all lowercase English letters. This name cannot be changed arbitrarily and
 must be consistent with the certificate file package structure above.
  "consumer_service_name" : ["xx", "xxx"], // The service name of the network
 management module using the certificate.
  "consumer_version" : "v1.0" // Update this version number when the certificate file is
 updated, v1.0, v1.1.
  "pfxSplit" : "true" // Whether the pfx file needs
 to be split into two files, a certificate
 file and a private key file. Most of the
 time, it needs to be split.
  },
 ....
  ]
```

Referring to FIG. 2, in some embodiments, before the step S10, the certificate preset method further includes:
step S01, obtaining an authoritative certificate issued by a certificate authority and generating a certificate package based on the authoritative certificate;
step S02, applying for a digital signature from the certificate authority based on the certificate package to obtain a signature file; and
step S03, generating a preset certificate package based on the certificate package and the signature file.

In this embodiment, the preset certificate package is generated in a non-production environment. First, based on the application of the preset certificate module, a unified application is made to the authoritative CA of the equipment manufacturer for the issuance of module certificates. Then, the certificate package and its internal directory structure, certificate files, and certificate description files are maintained in a unified manner. The password of the xxx_xxxx.pfx file is encrypted and stored using AES256 using the commands provided by the network management installation and upgrade tool. Different certificate files can use different passwords. Without the password, the certificate cannot be used. The certificate package contains a preset trusted peer CA certificate, which defaults to the equipment vendor's authoritative CA. After the network management administrator generates the certificate package zip, they apply for a digital signature from the equipment vendor's CA and generate a signature file such as cert.zip.sign. The network management system does not rely on the real certificate package for testing and verification in non-production environments; providing a test certificate package is sufficient.

As an example, the certificate package and its signature file are published to a unified version server for download in the production environment. One certificate package can be used with multiple network management version packages without a one-to-one correspondence.

Step S20, installing the network management system based on the network management version package.

It can be understood that since this embodiment uses a network management equipment vendor's preset certificate scenario as an example, after obtaining the network management version package required for installing the network management system, it is necessary to first install the network management system based on the network management version package, and during the installation process of the network management system, preset the certificates required for each network management business module in the network management system.

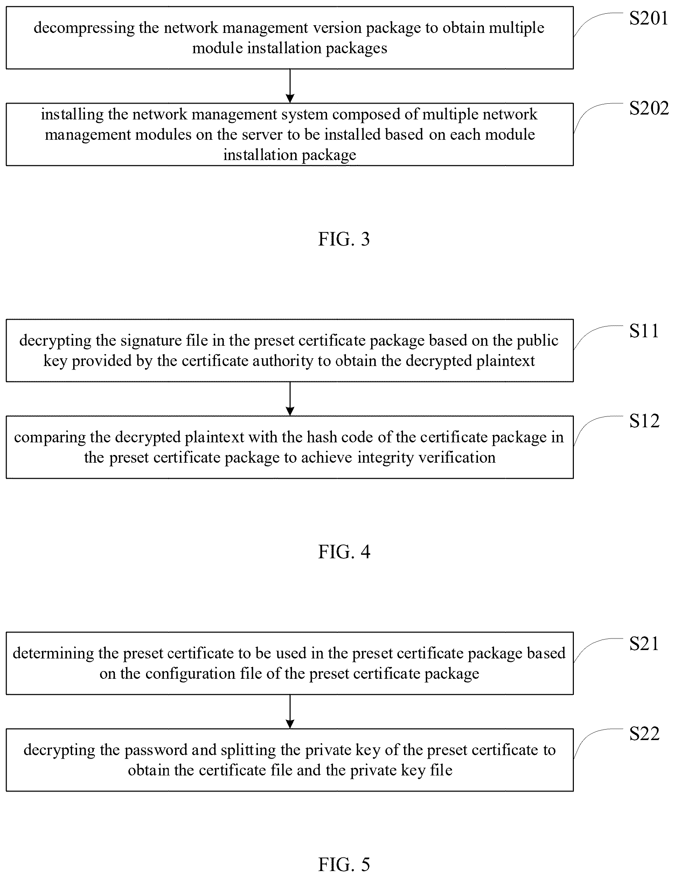

Referring to FIG. 3, in some embodiments, the step S20 includes:
step S201, decompressing the network management version package to obtain multiple module installation packages; and
step S202, installing the network management system composed of multiple network management modules on the server to be installed based on each module installation package.

The network management version package contains module installation packages corresponding to different network management business modules. After executing the installation programs for each network management business module on the server to be installed based on these module installation packages, a network management system composed of multiple network management business modules can be obtained.

Step S30, creating a secure storage module corresponding to each network management module in the network management system, and storing the preset certificates in the preset certificate package into the secure storage module so that each network management module associated with the secure storage module can obtain the required preset certificates.

To ensure the security of preset certificates, in this embodiment, the certificates required by each network management service module are not directly preset in the network management service module. Instead, a one-to-one secure storage module is created for each network management service module within the network management system to store the certificate files required by each network management service module. This allows each network management service module to directly read the required certificate files from the uniquely corresponding secure storage module upon startup and provide services externally in accordance with the security protocol.

As an example, the secure storage module in this embodiment can be a dedicated secure secret persistent volume for each network management service module.

This embodiment proposes the certificate preset method, which uses the equipment vendor's authoritative CA to issue corresponding certificates to each business module in the network management system, and introduces a certificate package to uniformly store the certificates, so that certificate preset and updates do not require online connection to the equipment vendor's CA server, the operator's or ToB enterprise user's internal CA server. In this embodiment, the network management service modules have usable certificates as soon as they start, enabling these modules to provide services to the outside world with security protocols after startup, without any security gaps. In addition, different modules can use different certificates. The network management modules cannot obtain truly preset certificates in non-production environments. The test environment uses test certificate packages for testing and verification. The certificate packages are not coupled with the network management version and do not need to correspond one-to-one with the network management version.

Referring to FIG. 4, in some embodiments, before the step S20, the certificate preset method further includes:
step S11, decrypting the signature file in the preset certificate package based on the public key provided by the certificate authority to obtain the decrypted plaintext; and
step S12, comparing the decrypted plaintext with the hash code of the certificate package in the preset certificate package to achieve integrity verification.

Considering the possibility that the preset certificate package may be corrupted, an integrity verification can be performed on the preset certificate package before installing the network management system. This ensures that the certificate preset process can proceed normally during the installation of the network management system. The integrity verification process described in this embodiment is also executed by the network management installation tool. The network management installation tool presets a public key provided by the certificate authority. Based on this public key, the signature file in the preset certificate package is decrypted, and then compared with the hash code of the certificate package. If the two are consistent, it means that the preset certificate package is complete. If the two are inconsistent, it means that the preset certificate package has been modified.

As an example, the network management system version package can be verified before installing the network management system to avoid problems such as network management system installation failure or outdated version after installation.

Referring to FIG. 5, in some embodiments, before the step S30, the certificate preset method further includes:
step S21, determining the preset certificate to be used in the preset certificate package based on the configuration file of the preset certificate package; and
step S22, decrypting the password and splitting the private key of the preset certificate to obtain the certificate file and the private key file.

Before storing the certificates in the secure storage module, it is necessary to determine the preset certificates required for each network management business module based on the configuration file of the preset certificate package, to avoid storing certificates that the network management business module does not need to use in its corresponding secure storage module. Furthermore, after determining the preset certificate to be used, it is not directly stored in the secure storage module. This is because the preset certificate actually exists in the form of an encrypted pfx file. If the pfx file is directly stored in the secure storage module, even if the network management service module obtains the pfx file, it will not be able to obtain the certificate it needs to use. Therefore, it is necessary to split the preset certificate into two files: a certificate file and a private key file. In subsequent steps, the certificate file and the private key file are stored in the secure storage module. Only in this way can the network management service module directly read the certificate file and private key file it needs to use from the corresponding secure storage module.

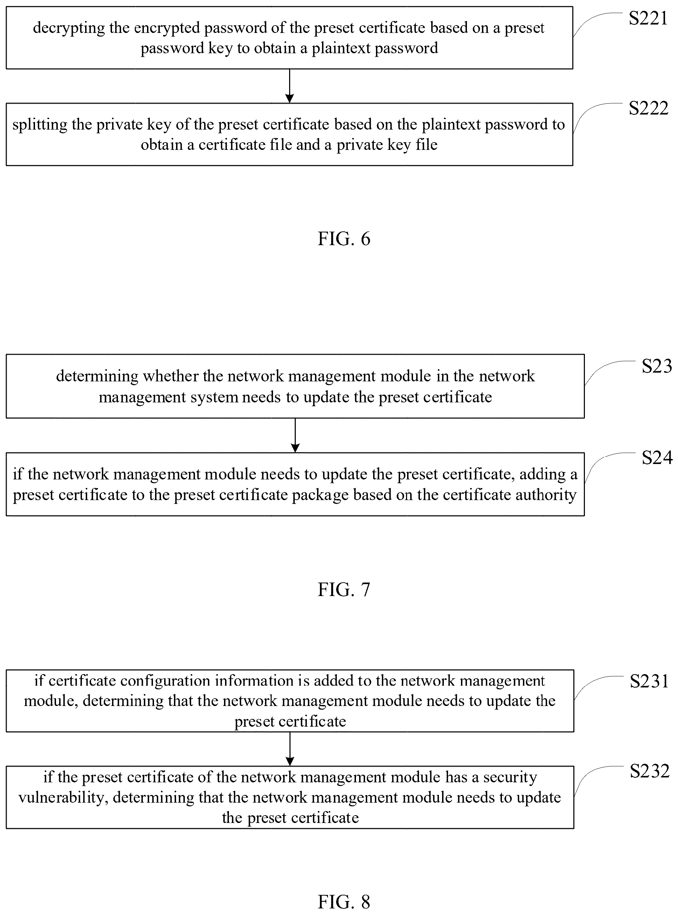

Referring to FIG. 6, in some embodiments, the step S22 includes:
step S221, decrypting the encrypted password of the preset certificate based on a preset password key to obtain a plaintext password; and
step S222, splitting the private key of the preset certificate based on the plaintext password to obtain a certificate file and a private key file.

As can be seen from the above embodiments, after the preset certificate is provided by the authoritative CA, it has been encrypted with an encrypted password. The preset password key is provided along with the preset certificate by the authoritative CA. The password needs to be decrypted first to obtain the plaintext password of the preset certificate used for encrypted storage. Then, based on the plaintext password, the preset certificate, i.e., the pfx file, is split into two files: the certificate file and the private key file.

It can be understood that the private key is a small piece of code paired with the public key, used to trigger the algorithms for encrypting and decrypting text. It is created as part of the public key encryption during asymmetric key encryption and is used to decrypt and convert messages into a readable format.

Referring to FIG. 7, in some embodiments, after the step S20, the certificate preset method further includes:
step S23, determining whether the network management module in the network management system needs to update the preset certificate; and
step S24, if the network management module needs to update the preset certificate, adding a preset certificate to the preset certificate package based on the certificate authority.

The above embodiments correspond to the preset scenario of network management equipment vendor certificates, while this embodiment corresponds to the update scenario of network management equipment vendor certificates. When a network management system already exists, the network management version package in the above embodiments can be replaced with a network management patch package. Similarly, the network management system can be upgraded or patched based on the network management patch package by installing an upgrade tool. After the upgrade or patching of the network management module is completed, it can be determined whether the certificate required by the updated network management module also needs to be updated. If it needs to be updated, it is also necessary to apply for and sign the certificate from an authoritative CA in a non-production environment to obtain a preset certificate package that matches the latest network management system.

It can be understood that not all module certificates need to be updated or newly added. Therefore, after upgrading or patching the network management module, by comparing the existing certificate package configuration file in the version with the configuration file of the certificate package to be processed, it is possible to determine which network management modules need to have their preset certificates updated or added.

Referring to FIG. 8, in some embodiments, the step S23 includes:
step S231, if certificate configuration information is added to the network management module, determining that the network management module needs to update the preset certificate; and
step S232, if the preset certificate of the network management module has a security vulnerability, determining that the network management module needs to update the preset certificate.

This embodiment mainly presents two scenarios requiring updates to the preset certificate: the scenario where the network management module adds the certificate configuration information, and the scenario where the preset certificate of the network management module has security vulnerabilities. The security vulnerabilities can include various situations such as security vulnerabilities in the preset certificate, data leaks, or nearing expiration.

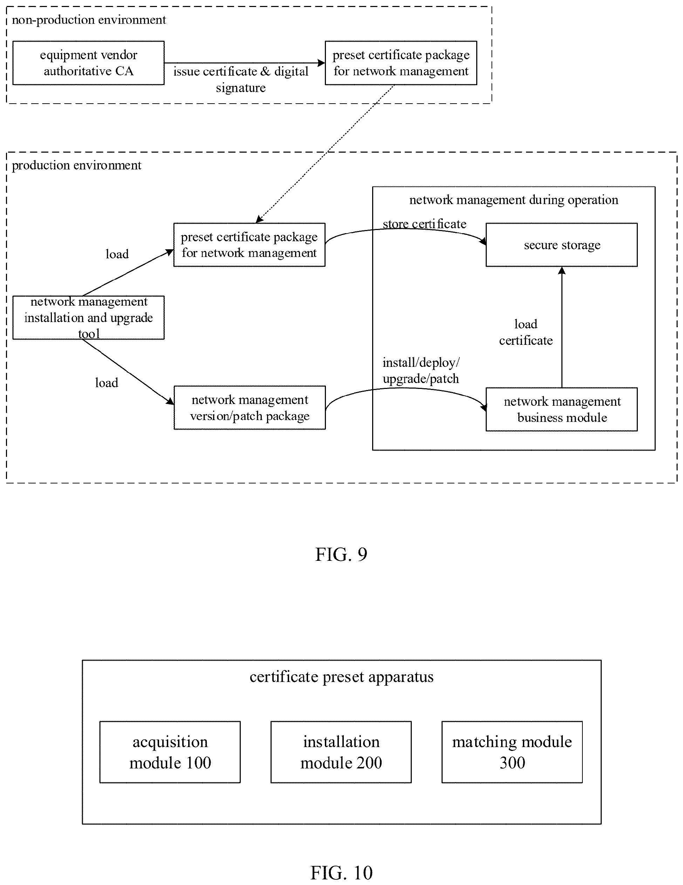

Referring to FIG. 9, the system architecture shown in FIG. 9 can be applied to any of the above embodiments. As shown in FIG. 9, the entire system includes the following key components:
1. Authoritative CA (certificate authority) of equipment vendors: A universally trusted authoritative CA that can be trusted by operators or ToB enterprise users to complete the issuance of preset certificates in the certificate package and the digital signature of the certificate package.
2. Network management system: the network management system modules related to the embodiments of the present application include:
   1) Network management installation and upgrade tool: used to load network management version/patch packages and preset network management certificate packages, perform integrity verification and decryption of the certificate packages, load and store the certificates in a secure storage that the modules can independently access for use by related modules; also used to load network management version/patch packages, install/deploy/upgrade/patch network management business modules, such as north-south modules.
   2) Preset certificate package for network management: used to preset the certificates issued by authoritative CAs from equipment vendors. These certificates are installed into the network management system through the network management installation and upgrade tool, so that the relevant modules have usable certificates before startup.
   3) Network management version/patch package: software installation/upgrade/patch packages for network management business modules.
   4) Secure storage: Storage devices or software capable of securely storing important files such as private keys. This secure storage is used to store preset module-related certificates and private keys. Different modules use different storage spaces and access controls for secure isolation.

Network management business module: A general business module that requires the certificates to provide services externally using TLS and HTTPS security protocols. It is installed, deployed/upgraded/patched by the network management version upgrade tool, and loads the required preset certificates from secure storage when the module starts to provide services externally using TLS and HTTPS security protocols.

Furthermore, the present application embodiment also provides a certificate preset apparatus. Referring to FIG. 10, FIG. 10 is a schematic structural diagram of the certificate preset apparatus according to an embodiment of the present application. As shown in FIG. 10, the certificate preset apparatus in this embodiment includes: an acquisition module 100, an installation module 200, and a matching module 300.

The acquisition module 100 is configured to acquire a network management version package and a preset certificate package matching the network management version package.

The installation module 200 is configured to install the network management system based on the network management version package.

The matching module 300 is configured to create a secure storage module corresponding to each network management module in the network management system, and store the preset certificates in the preset certificate package into the secure storage module, so that each network management module associated with the secure storage module can obtain the required preset certificates.

The certificate preset apparatus provided in this embodiment and the certificate preset method provided in the above embodiments belong to the same inventive concept. Technical details not described in detail in this embodiment can be found in any of the above embodiments, and this embodiment has the same beneficial effects as executing the certificate preset method.

The apparatus embodiments described above are merely illustrative. The units described as separate components may or may not be physically separate; that is, they may be located in one place or distributed across multiple network units. Some or all of the modules can be selected to achieve the purpose of this embodiment according to actual needs.

Furthermore, the present application also provides a certificate preset device. The certificate preset method applied to the certificate preset device described above can be executed by the certificate preset apparatus, which can be implemented by software and/or hardware and integrated into the certificate preset device. The certificate preset device can be a terminal device capable of communicating with the network side, such as a personal computer (PC), mobile phone, laptop, or tablet computer.

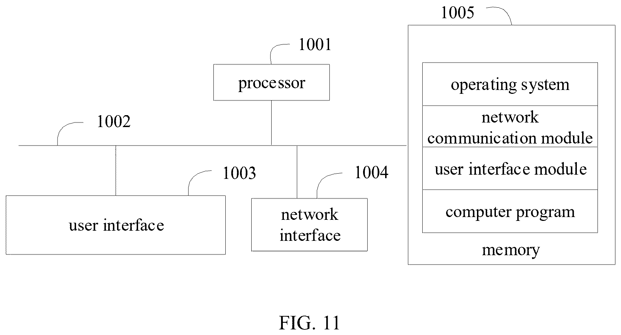

Referring to FIG. 11, FIG. 11 is a schematic diagram of the hardware structure of a certificate preset device according to an embodiment of the present application. As shown in FIG. 11, the certificate preset device may include: a processor 1001, such as a central processing unit (CPU), a communication bus 1002, a user interface 1003, a network interface 1004 and a memory 1005. The communication bus 1002 is used to realize communication between these components. The user interface 1003 may include a display and an input unit such as a keyboard. The user interface 1003 may also include standard wired interfaces and wireless interfaces. The network interface 1004 may include standard wired interfaces and wireless interfaces (such as wireless-fidelity (Wi-Fi) interfaces). The memory 1005 can be high-speed random access memory (RAM) or stable non-volatile memory (NVM), such as disk storage. The memory 1005 can also be a storage device independent of the aforementioned processor 1001.

Those skilled in the art will understand that the structure shown in FIG. 11 does not constitute a limitation on the certificate preset device, and may include more or fewer components than shown, or combine certain components, or have different component arrangements. As shown in FIG. 11, the memory 1005, as a storage medium, may include an operating system, a data storage module, a network communication module, a user interface module and a computer program.

In the certificate preset device shown in FIG. 11, the network interface 1004 is mainly used for data communication with other devices, the user interface 1003 is mainly used for data interaction with the user, and the processor 1001 and the memory 1005 in this embodiment can be provided in the certificate preset device. The certificate preset device calls the computer program stored in the memory 1005 through the processor 1001 and executes the certificate preset method applied to the certificate preset device provided in any of the above embodiments.

The certificate preset device proposed in this embodiment and the certificate preset method applied to the certificate preset device proposed in the above embodiments belong to the same inventive concept. Technical details not described in detail in this embodiment can be found in any of the above embodiments. Furthermore, this embodiment has the same beneficial effects as performing the certificate preset method.

Furthermore, the present application also provides a computer-readable storage medium, which can be a non-volatile computer-readable storage medium, on which a computer program is stored. When the computer program is executed by a processor, the certificate preset method provided in any of the above embodiments is implemented.

Those skilled in the art will understand that all or some of the steps in the methods disclosed above, and the system, can be implemented as software, firmware, hardware, or suitable combinations thereof. Some or all of the physical components can be implemented as software executed by a processor, such as a central processing unit, digital signal processor, or microprocessor, or as hardware, or as an integrated circuit, such as an application-specific integrated circuit. Such software can be distributed on a computer-readable medium, which may include computer storage media (or non-transitory media) and communication media (or transient media). As is known to those skilled in the art, the term "computer storage medium" includes volatile and non-volatile, removable and non-removable media implemented in any method or technique for storing information (such as computer-readable instructions, data structures, program modules or other data). The computer storage media include, but are not limited to, RAM, ROM, EEPROM, flash memory or other memory technologies, CD-ROM, DVD (digital versatile disc) or other optical disc storage, magnetic cartridges, magnetic tape, disk storage or other magnetic storage devices, or any other medium that can be used to store desired information and is accessible to a computer. Furthermore, as is known to those skilled in the art, the communication media typically contain computer-readable instructions, data structures, program modules, or other data in modulated data signals such as carrier waves or other transmission mechanisms, and may include any information delivery medium.

The above describes some embodiments of the present application. However, the embodiments of the present application are not limited to the above. Those skilled in the art can make various equivalent modifications or substitutions without departing from the spirit of the embodiments of the present application. All such equivalent modifications or substitutions are included within the scope defined by the claims of the embodiments of the present application.

## Claims

1. A certificate preset method, **characterized by** comprising:
obtaining a network management version package and a preset certificate package matching the network management version package;
installing a network management system based on the network management version package; and
creating a secure storage module corresponding to each network management module in the network management system, and storing preset certificates in the preset certificate package into the secure storage module, so that each network management module associated with the secure storage module obtains required preset certificates.

2. The certificate preset method according to claim 1, wherein before the obtaining the network management version package and the preset certificate package matching the network management version package, the certificate preset method further comprises:
obtaining an authoritative certificate issued by a certificate authority, and generating a certificate package based on the authoritative certificate;
applying for a digital signature from the certificate authority based on the certificate package to obtain a signature file; and
generating a preset certificate package based on the certificate package and the signature file.

3. The certificate preset method according to claim 1, wherein before the installing the network management system based on the network management version package, the certificate preset method further comprises:
decrypting a signature file in the preset certificate package based on a public key provided by the certificate authority to obtain a decrypted plaintext; and
comparing the decrypted plaintext with a hash code of a certificate package in the preset certificate package to achieve integrity verification.

4. The certificate preset method according to claim 1, wherein the installing the network management system based on the network management version package comprises:
decompressing the network management version package to obtain multiple module installation packages; and
installing the network management system composed of multiple network management modules on a server to be installed based on each of the multiple module installation packages.

5. The certificate preset method according to claim 1, wherein before the creating the secure storage module corresponding to each network management module in the network management system, the certificate preset method further comprises:
determining a preset certificate to be used in the preset certificate package based on a configuration file of the preset certificate package; and
decrypting a password and splitting a private key of the preset certificate to obtain a certificate file and a private key file.

6. The certificate preset method according to claim 5, wherein the decrypting the password and splitting the private key of the preset certificate to obtain the certificate file and the private key file comprises:
decrypting an encrypted password of the preset certificate based on a preset password key to obtain a plaintext password; and
splitting the private key of the preset certificate based on the plaintext password to obtain the certificate file and the private key file.

7. The certificate preset method according to claim 1, wherein after installing the network management system based on the network management version package, the method certificate preset further comprises:
determining whether each network management module in the network management system needs to update the preset certificate; and
in response to that the network management module needs to update the preset certificate, adding a preset certificate to the preset certificate package based on the certificate authority.

8. The certificate preset method according to claim 7, wherein determining whether the network management module in the network management system needs to update the preset certificate comprises:
in response to that certificate configuration information is added to the network management module, determining that the network management module needs to update the preset certificate; or
in response to that the preset certificate of the network management module has a security vulnerability, determining that the network management module needs to update the preset certificate.

9. A certificate preset device, **characterized by** comprising: a memory, a processor, and a computer program stored on the memory and executable on the processor, wherein when the computer program is executed by the processor, the certificate preset method according to any one of claims 1 to 8 is implemented.

10. A computer-readable storage medium, **characterized in that** a computer program is stored on the computer-readable storage medium, wherein when the computer program is executed by a processor, the certificate preset method according to any one of claims 1 to 8 is implemented.
